Europäisches Patentamt

European Patent Office

Office européen des brevets

(19)

(11) Numéro de publication : **0 122 645**
**B1**

(12) **FASCICULE DE BREVET EUROPÉEN**

(45) Date de publication du fascicule du brevet :
07.09.88

(51) Int. Cl.⁴ : **G 02 B  6/42**

(21) Numéro de dépôt : **84200294.1**

(22) Date de dépôt : **01.03.84**

(54) **Procédé de couplage de deux éléments optiques constituant un dispositif de transmission d'informations lumineuses, et dispositif ainsi obtenu.**

(30) Priorité : **02.03.83 FR 8303418**

(43) Date de publication de la demande :
**24.10.84 Bulletin 84/43**

(45) Mention de la délivrance du brevet :
**07.09.88 Bulletin 88/36**

(84) Etats contractants désignés :
**DE FR GB SE**

(56) Documents cités :
**US-A- 4 184 070**
**PATENTS ABSTRACTS OF JAPAN, vol. 6, no. 128 (E-118)[1006], 14 juillet 1982, page 57 E 118**
**PATENTS ABSTRACTS OF JAPAN, vol. 3, no. 58 (E-111), 18 mai 1979, page 1 E 111**
**ELEKTROTECHNIK, vol. 61, no. 20, octobre 1979, pages 14-21, Berlin, DE; O. KRUMPHOLZ: "Stecker und Spleisse"**
**OPTICS AND LASER TECHNOLOGY, vol. 14, no. 1, février 1982, pages 15-20, Butterworth & Co. (Publishers) Ltd., Guilford, Surrey, GB; T.P. LEE: "LEDs and photodetectors for wavelength-division-multiplexed light-wave systems"**

(73) Titulaire : **RTC-COMPELEC**
**130, Avenue Ledru-Rollin**
**F-75011 Paris (FR)**
**FR**
**N.V. Philips' Gloeilampenfabrieken**
**Groenewoudseweg 1**
**NL-5621 BA Eindhoven (NL)**
**DE GB SE**

(72) Inventeur : **Thillays, Jacques**
**SOCIETE CIVILE S.P.I.D. 209 rue de l'Université**
**F-75007 Paris (FR)**

(74) Mandataire : **Pinchon, Pierre et al**
**Société Civile S.P.I.D. 209 rue de l'Université**
**F-75007 Paris (FR)**

## Description

La présente invention concerne un procédé de couplage d'un premier élément optique constitué d'une fibre optique par rapport à un second élément optique, comportant un composant optoélectronique portant au moins une jonction créée dans un corps semiconducteur et dont les prises de contact sont formées de plages métalliques disposées à la surface des diverses régions semiconductrices dudit corps, procédé selon lequel on amène la face active d'une extrémité de ladite fibre en regard du second élément dans une position telle que le rendement de transfert des rayonnements lumineux transmis par ladite fibre est optimal, l'ensemble étant maintenu dans cette position jusqu'à son enrobage dans une matière plastique opaque formant une enveloppe étanche aux rayonnements lumineux extérieurs l'ensemble ainsi formé constituant un dispositif de transmission d'informations lumineuses.

La présente invention concerne également le dispositif obtenu par ce procédé.

Dans le domaine des télécommunications, il est connu de remplacer certaines liaisons électriques coaxiales entre appareillages électroniques par des liaisons optiques obtenues par l'intermédiaire de fibres optiques placées dans une enveloppe appropriée et interconnectant une source émettrice de lumière et un photorécepteur.

Ces fibres optiques, utilisables dans des gammes de fréquences élevées, présentent l'avantage d'être insensibles aux perturbations parasites extérieures et ont un coefficient d'atténuation plus faible que les câbles coaxiaux classiques.

Pour des raisons de poids et d'encombrement et pour des raisons de côut évidentes, le diamètre de la section active d'une fibre optique se trouve stabilisée à l'heure actuelle autour de 50 μm. Or, un tel type de fibre est généralement associé à des composants électroniques, notamment des sources émissives de lumière, créés sur des cristaux semiconducteurs dont la jonction photoactive présente un diamètre de dimension sensiblement équivalente. Dans ces conditions, sachant que l'angle d'acceptance d'une fibre optique peut ne pas dépasser 10°, il est évident que si la source émissive n'est pas suffisamment directive ou si la face active de la fibre, c'est-à-dire la face en regard de la jonction semiconductrice, n'est pas mise en place avec précision, le rendement de transfert ou de couplage est notablement réduit.

Pour assurer une transmission optimale des informations dans une fibre, il est donc souhaitable, d'une part d'introduire dans ladite fibre un maximum de lumière, et d'autre part d'établir avec un très grand soin le centrage et la distance entre la source émissive et la face active de la fibre.

Il en découle que la mise en place d'une fibre à peine visible pour un oeil non exercé face à une source lumineuse de diamètre équivalent à celui de ladite fibre présente de grandes difficultés techniques.

Lorsqu'il s'agit du couplage d'une fibre optique avec un composant optoélectronique photorécepteur, le problème du centrage d'un élément par rapport à l'autre ne se pose pas avec la même acuité.

En effet, dans les dispositifs connus, l'élément photorécepteur est généralement une diode semiconductrice dont le diamètre de jonction est supérieur à celui de la section de la face active de la fibre, ce qui autorise une certaine marge d'erreur dans la mise en place et le centrage des éléments. Cependant, si l'on est amené à réduire la surface de la diode photoréceptrice par rapport à celle de la section de la fibre, on rencontre les mêmes difficultés que dans le cas plus largement exposé ci-dessus du centrage d'une fibre par rapport à une source émissive.

Pour faciliter l'assemblage d'un dispositif de transmission par fibre, les composants optoélectroniques, ou composants d'extrémité, sont souvent rattachés à une fibre dite de transfert d'informations par l'intermédiaire d'une fibre de faible longueur, dite fibre amorce, définitivement fixée à chacun desdits composants. Cette solution, intéressante sur le plan industriel, nécessite également un parfait centrage de la fibre amorce par rapport au composant optoélectronique.

Dans une forme récente, les dispositifs de transmission par fibre comportent à chacune de ses extrémités un composant optoélectronique porté par un support métallique et enrobé dans une enveloppe en matière plastique opaque. Dans cette enveloppe et en regard dudit composant optoélectronique, est formé un conduit dans lequel est introduite et fixée une extrémité de la fibre transfert ou de la fibre amorce.

Il va de soi que le centrage du composant optoélectronique disposé sur une face plane d'un support relativement large servant à la fois d'embase et de dissipateur par rapport à la fibre optique guidée par le conduit ainsi que le respect de la distance entre ledit composant optoélectronique et la face active de l'extrémité de la fibre sont relativement difficiles à obtenir. En effet, les tolérances de dimensions des diamètres de la fibre optique et du conduit nécessaires à l'introduction aisée de la fibre font souvent apparaître un jeu non négligeable entre ces divers éléments.

Or, entre le moment de la mise en coïncidence de la fibre avec le composant optoélectronique et le moment de la fixation de ladite fibre dans le conduit, s'écoule un temps généralement assez long pendant lequel il faut maintenir les éléments dans leur position initiale.

Les solutions actuellement connues sont rares et, dans la plupart des cas, leur mise en oeuvre nécessite de nombreuses opérations et une précision mécanique importante qui les rendent coûteuses.

Un procédé couramment employé consiste à utiliser une diode semiconductrice dite « de Bur- rus » dans la cavité de laquelle on introduit l'extrémité de la fibre optique dont la face active est appliquée sur le fond de ladite cavité.

Cependant, malgré le soin apporté à la mise en place des éléments, la précision de l'assemblage reste insuffisante : ce manque de précision provoqué non seulement par le jeu des tolérances des dimensions de la cavité et de la fibre optique, mais également par le retrait ou le glissement de la résine lors de sa polymérisation, conduit à un rendement de transfert médiocre.

On connaît de la demande de brevet japonais JP-A-5 753 989 un coupleur d'une diode électroluminescente à une fibre optique, du type mettant en oeuvre une bille transparente. Cette dernière est maintenue en position avant enrobage par une partie recourbée des fils de connexion. Ce positionnement est peu précis à cause de l'élasticité des fils et en outre a pour inconvénient d'introduire une mise en contrainte permanente de ceux-ci.

La présente invention a pour but de remédier à ces inconvénients. Pour ce faire, elle s'appuie sur le fait que la meilleure manière d'obtenir un transfert lumineux élevé entre une fibre optique et un composant optoélectronique consiste à appliquer la face active située à l'extrémité de ladite fibre au plus près de la jonction semiconductrice dudit composant, et elle s'appuie également sur les progrès réalisés dans les techniques de dépôts métalliques localisés utilisées habituellement dans l'industrie des semiconducteurs tels que transistors ou circuits intégrés.

En effet, la présente invention concerne un procédé de couplage du type précité et qui est notamment remarquable en ce que, lors du soudage par thermocompression de fils de connexion sur les plages métalliques de contact, on dispose sur celles-ci au moins trois plots de forme partiellement sphérique et de section supérieure à celle desdits fils, lesdits plots étant disposés d'une manière telle qu'ils sont tangentiels à la périphérie d'un domaine circulaire de diamètre égal à celui de la fibre optique, en ce que l'on fait glisser l'extrémité de cette dernière entre lesdits plots de manière à en appliquer la face active contre les plages métalliques de contact du composant optoélectronique au plus près de la surface du composant optoélectronique, et en ce que l'on immobilise ladite extrémité de la fibre dans cette position avant d'enrober l'ensemble dans la matière plastique opaque constituant l'enveloppe de protection.

La mise en œuvre de ce procédé présente de nombreux avantages. L'expérience a montré, en effet, que la mise en place sans précautions spéciales de la fibre optique en regard du composant optoélectronique conduit à des rendements de transfert très corrects.

Par ailleurs, cette mise en œuvre peut être effectuée sans faire appel à des opérations supplémentaires et/ou à des appareillages spéciaux. Il sera avantageux, par exemple, de réaliser le soudage des fils de connexion sur les plages métalliques de contact par un procédé de thermocompression connu des spécialistes sous le nom de «soudage par tête de clou».

Le principe de ce procédé de soudage consiste, en effet, à descendre et à presser sur les plages métalliques de contact l'extrémité d'un fil à laquelle on a donné préalablement la forme d'une boule et qui, après pressage, prend la forme d'un plot renflé. Dans ces conditions, on obtient simultanément le soudage des fils de connexion et la réalisation des plots partiellement sphériques conformes à la présente invention. Les plots étant sensiblement sphériques, le guidage de la fibre est favorisé par les contours arrondis qui forment entonnoir. L'utilisation de l'appareillage adapté à ce procédé de soudage permet de bénéficier, en outre, de ses avantages propres, à savoir précision dans la mise en place des plots (résolution de l'ordre de 4μm), rapidité (4 plots déposés par seconde), automatisation de l'opération de dépôt à partir d'une programmation précise obtenue manuellement.

Pour faciliter ladite programmation de l'opération de dépôt et pour garantir un appui latéral de l'extrémité de la fibre optique en au moins trois points, les plages métalliques de contact et les plots qui les recouvrent sont avantageusement au moins au nombre de quatre.

La mise en œuvre du procédé selon l'invention s'applique à tous les types de dispositifs de transmission par fibre optique, mais elle est particulièrement intéressante dans le cas de dispositifs à sortir de fibre dite latérale. On sait, en effet, que les dispositifs de transmission par fibre sont fixés le plus souvent sur des circuits imprimés portés par des cartes enfichables disposées parallèlement entre elles et entre lesquelles l'espace est restreint. Il est donc préférable que la fibre optique sortant de chacun des dispositifs soit orientée dans une direction parallèle au plan desdites cartes et non dans une direction perpendiculaire.

La présente invention concerne également le dispositif de transmission d'informations lumineuses obtenu par le procédé ci-dessus décrit et comportant notamment deux éléments optiques dont le premier est constitué d'au moins une fibre optique et dont le second élément comporte essentiellement un composant optoélectronique créé dans un corps semiconducteur et dont les prises de contact sont formées de couches métalliques superficielles, les deux éléments optiques étant maintenus et enrobés dans une matière plastique opaque, dispositif notamment remarquable en ce que l'extrémité de la fibre optique est serrée entre au moins trois plots métalliques de forme partiellement sphérique déposés à la surface des plages de contact du dispositif.

La description qui va suivre, en regard des figures décrivant des exemples non limitatifs, fera bien comprendre comment l'invention peut être réalisée.

La figure 1 représente une vue de face très schématisée du dispositif de transmission d'informations lumineuses obtenu par le procédé selon l'invention.

La figure 2 représente une vue de dessus de ce même dispositif.

Il est à noter que, sur les figures, les dimensions sont considérablement exagérées et non proportionnées, ceci afin de rendre le dessin plus clair.

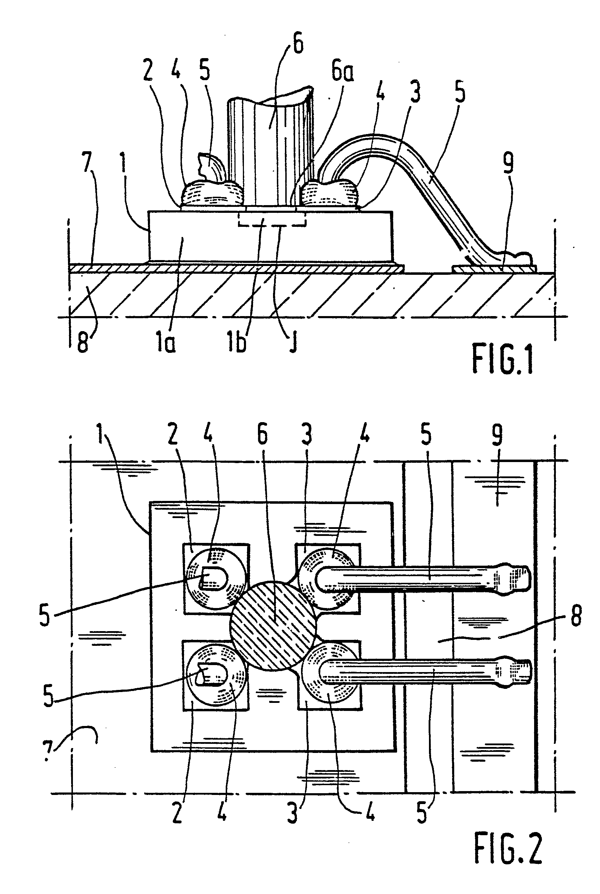

Conformément aux figures 1 et 2, et selon le procédé selon l'invention, on part d'un cristal semiconducteur 1 soudé sur une couche métallique 7 d'un support isolant 8 et disposant d'un ensemble de plages métallisées 2 et 3 parfaitement localisées autour d'une jonction J, sur lequel on crée des plots métalliques 4 à l'aide de la machine de soudage par thermocompression utilisée simultanément pour la mise en place des fils de connexion 5. En fait, ces plots sont obtenus par l'écrasement d'une boule préalablement formée à l'extrémité du fil de connexion.

Lesdits plots métalliques 4 sont donc destinés à circonscrire un domaine où la fibre optique 6 vient se loger sans difficultés sur l'axe même et au plus près de la jonction J, en prenant appui par sa face active 6a sur les plages 2 et 3, et guidée par lesdits plots 4.

Le second but desdits plots est de permettre la réalisation du contact avec l'extérieur des régions 1a et 1b du cristal semiconducteur 1 par l'intermédiaire des plages métalliques 2 et 3, et de couches métalliques telles que la couche 9 déposée sur le support isolant 8.

De préférence, le nombre des plots métalliques 4 est au moins choisi égal à quatre de manière à ce que, dans l'hypothèse où l'emplacement de l'un d'entre eux par rapport à l'endroit prévu serait légèrement décalé, la fibre 6 soit cependant guidée par plus de deux points d'appui.

L'ensemble constitué du cristal semiconducteur (1), des plages métalliques (2, 3), des plots (4), des fils (5) et de l'extrémité de la fibre (6) est ensuite enrobé dans une enveloppe de protection en matière plastique opaque non représentée sur la figure.

**Revendications**

1. Procédé de couplage d'un premier élément optique constitué d'une fibre optique (6) par rapport à un second élément optique, comportant un composant optoélectronique portant au moins une jonction (J) créée dans un corps semiconducteur (1) et dont les prises de contact (2, 3) sont formées de plages métalliques disposées à la surface des diverses régions semiconductrices (1a, 1b) dudit corps (1), procédé selon lequel on amène la face active (6a) d'une extrémité de ladite fibre (6) en regard du second élément dans une position telle que le rendement de transfert des rayonnements lumineux transmis par ladite fibre est optimal, l'ensemble étant maintenu dans cette position jusqu'à son enrobage dans une matière plastique opaque formant une enveloppe étanche aux rayonnements lumineux extérieurs l'ensemble ainsi formé constituant un dispositif de transmission d'informations lumineuses, caractérisé en ce que, lors du soudage par thermocompression de fils de connexion (5) sur les plages métalliques de contact (2, 3), on dispose sur celles-ci au moins trois plots (4) de forme partiellement sphérique et de section supérieure à celle desdits fils (5), lesdits plots (4) étant disposés d'une manière telle qu'ils sont tangentiels à la périphérie d'un domaine circulaire de diamètre égal à celui de la fibre optique (6), en ce que l'on fait glisser l'extrémité de cette dernière entre lesdits plots (4) de manière à en appliquer la face active (6a) contre les plages métalliques de contact (2, 3) du composant optoélectronique au plus près de la surface du composant optoélectronique, et en ce que l'on immobilise ladite extrémité de la fibre (6) dans cette position avant d'enrober l'ensemble dans la matière plastique opaque constituant l'enveloppe de protection.

2. Procédé selon la revendication 1, caractérisé en ce que l'on créé au moins quatre plages métalliques de contact (2, 3) et au moins quatre plots (4) à la surface du corps semiconducteur (1).

3. Dispositif de transmission d'informations lumineuses obtenu par le procédé conforme aux revendications 1 et 2, et caractérisé en ce que l'extrémité de la fibre optique (6) est serrée entre au moins trois plots métalliques (4) de forme partiellement sphérique déposés à la surface des plages de contact (2, 3) dudit composant optoélectronique du dispositif.

**Claims**

1. A method of coupling a first optical element constituted by an optical fibre (6) to a second optical element, comprising an optoelectronic component provided with at least one junction (J) formed in a semiconductor body (1) and whose contact terminals (2, 3) are metallic areas which are provided on the surface of the several semiconductor regions (1a, 1b) of said body (1), a method in accordance with which the active face (6a) of one end of said fibre (6) is positioned opposite the second element such that the transfer efficiency of the light rays emitted by said fibre is optimum, the assembly being retained in this position until it is enclosed in an opaque plastic material which forms an envelope which is impenetrable to external light, the assembly thus formed constituting an optical data transmission device, characterized in that, during thermocompression bonding of the connection wires (5) to the metallic contact pads (2, 3), there are available thereon at least three beads (4) of a partly spherical shape and having a diameter which is larger than that of the said wires (5), said beads being provided in such a manner that they are tangential at the periphery of a circular region having a diameter equal to that of the optical fibre (6), in that the end of the latter is slid between said beads (4) such that the active face (6a) is in contact with the metallic contact pads of the opto-electronic component nearest to the surface of the optoelectronic component, and in that said end of the fibre (6) is immobilized in this position before the assembly is enclosed in the opaque plastic material constituting the protection envelope.

2. A method as claimed in Claim 1, characterized in that at least four metallic contact pads (2, 3) and at least four beads (4) are produced on the surface of the semiconductor body (1).

3. An optical data transmission device obtained by means of the method as claimed in Claims 1 and 2 and characterized in that the end of the optical fibre (6) is locked between at least three metallic beads (4) of a partly spherical shape deposited on the surface of the contact pads (2, 3) of the opto-electronic component of the said device.

**Patentansprüche**

1. Verfahren zum Verbinden eines ersten optischen Elementes, das gebildet wird durch eine optischen Faser (6), mit einem zweiten optischen Element mit einem optoelektronischen Bauelement, das mindenstens einen Übergang (J) in einem Halbleiterkörper (1) aufweist und wobei die Kontaktstellen (2, 3) aus Metallschichten bestehen, die auf der Oberfläche der jeweiligen Halbleitergebiete (1a, 1b) des genannten Körpers (1) vorgesehen sind, wobei nach diesem Verfahren die aktive Fläche (6a) eines Endes der Faser (6) gegenüber dem zweiten Element in eine derartige Lage gebracht wird, dass der Übertragungswirkungsgrad der durch diese Faser übertragenen Lichstrahlen optimal ist, wobei das Gefüge in dieser Lage gehalten wird bis die Ummantelung in einer für Lichstrahlen von aussen dichten Hülle aus einem lichtundurchlässigen Kunststoff durchgeführt ist, wobei das auf diese Weise gebildete Gefüge eine Vorrichtung zur übertragung von Lichtinformationen bildet, dadurch gekennzeichnet, dass beim Verschweissen der Verbindungsdrähte (5) mit den metallischen Kontaktstellen (2, 3) durch Thermokompression an diesen Stellen mindestens drei teilweise kugelförmige Kontaktklötze (4) mit einem grösseren Durchmesser als der dieser Drähte (5) angebracht werden, wobei diese Kontaktklötze (4) derart angeordnet werden, dass sie an den Umkreis eines kreisförmigen Gebietes grenzen, dessen Durchmesser dem der optischen Faser (6) entspricht und dass das Ende dieser letzteren zwischen die genannten Kontaktklötze (4) derart eingeschoben wird, dass die aktive Fläche (6a) an den metallischen Kontaktflächen (2, 3) des optoelektronischen Bauelementes und zwar möglichst nahe bei der Oberfläche des optoelektronischen Bauelementes angebracht wird und dass das Ende der Faser (6) vor der Ummantelung des Gefüges mit dem lichtundurchlässigen Kunststoff, der die Schutzumhüllung bildet, in dieser Lage immobilisiert wird.

2. Verfahren nach Anspruch 1, dadurch gekennzeichnet, dass mindestens vier metallische Kontaktstellen (2, 3) und mindestens vier Kontaktklötze (4) auf der Oberfläche des Halbleiterkörpers (1) gebildet werden.

3. Vorrichtung zur Übertragung von Lichtinformationen nach dem Verfahren nach den Ansprüchen 1 und 2, dadurch gekennzeichnet, dass das Ende der optischen Faser (6) zwischen mindestens drei metallische halbkugelförmige Kontaktklötze (4) auf der Oberfläche der Kontaktstellen (2, 3) des genannten optoelektronischen Bauelementes der Vorrichtung eingefügt wird.

FIG.1

FIG.2